(19) Europäisches Patentamt

European Patent Office

Office européen des brevets

(11) Veröffentlichungsnummer: **0 250 874 B1**

(12) **EUROPÄISCHE PATENTSCHRIFT**

(45) Veröffentlichungstag der Patentschrift: **22.11.90**

(21) Anmeldenummer: **87107716.0**

(22) Anmeldetag: **27.05.87**

(51) Int. Cl.⁵: **F 24 H 1/28, F 24 H 9/14**

(54) **Heizungskessel.**

(30) Priorität: **27.06.86 DE 8617230 u**

(43) Veröffentlichungstag der Anmeldung:
**07.01.88 Patentblatt 88/01**

(45) Bekanntmachung des Hinweises auf die
Patenterteilung:
**22.11.90 Patentblatt 90/47**

(84) Benannte Vertragsstaaten:
**AT BE CH DE ES FR IT LI NL**

(56) Entgegenhaltungen:
**DE-A-3 347 559**
**DE-U-8 601 896**

(73) Patentinhaber: **Viessmann Werke GmbH & Co.**
**Postfach 10 Viessmannstrasse**
**D-3559 Allendorf (Eder) (DE)**

(72) Erfinder: **Viessmann, Hans, Dr.**
**Im Hain**
**D-3559 Battenberg/Eder (DE)**

(74) Vertreter: **Wolf, Günter, Dipl.Ing.**
**Patentanwälte Dipl.-Ing. Amthor Dipl.-Ing. Wolf**
**Postfach 70 02 45 An der Mainbrücke 16**
**D-6450 Hanau 7 (DE)**

Courier Press, Leamington Spa, England.

## Beschreibung

Die Erfindung betrifft einen Heizungskessel gemäß dem ersten Teil des Patentanspruchs 1.

Derartige Heizungskessel, und zwar als sogenannte Niedertemperaturheizkessel betreibbar, sind nach der DE-A-3 347 559 und als sogenannte Kondensatheizkessel bspw. nach der DE-U-8 601 896 bekannt. Die Brennkammern dieser vorbekannten Heizkessel weisen keine topfartigen Brennkammereinsätze auf, arbeiten also nicht mit sogenannter Umkehrflamme und müssen deshalb ausreichend lang sein, um eine entsprechend lange Ausbrandstrecke für die Brennerkammer verfügbar zu haben. Dadurch können die Brennkammern im Durchmesser relativ klein gehalten werden, was den Vorteil hat, daß in dieser Hinsicht derartige Heizungskessel relativ schmal gebaut werden können. Ungeachtet dessen können jedoch bezüglich des Außengehäuses oder bezüglich anzuschließender Brennkammerverschlüsse Außenabmessungen des Gesamtkessels vorliegen, die den Transport durch Kesselaufstellraumtüren erschweren bzw. behindern, wobei zudem zu beachten ist, daß derartige Kesselgehäuse häufig nicht ohne weiteres gekippt werden können, wenn die betreffende Raumdecke zu niedrig ist. Abgesehen davon, daß es allgemein bekannt ist, Heizungskessel, allerdings anderer Bauart, teilbar auszubilden, so ist es bei dem vorbekannten Kessel nach der genannten DE-A-3 347 559 bereits bekannt, diesen aus den genannten Gründen längs seiner Mittellängsebene zu teilen, was dort noch mit einem verwirklichbaren Aufwand vertretbar erscheint, da bei diesem Kessel die Heizgaszugrohre nicht mit einem alle Rohre umfassenden wasserführenden Gehäuse umgeben, sondern durch einzelne wasserführende Rohre geführt sind.

Der Erfindung liegt demgemäß die Aufgabe zugrunde, einen Heizungskessel der eingangs genannten Art, wenn diese relativ große Außenabmessungen haben, diese also insbesondere für mittlere oder höhere Leistungsbereiche bestimmt sind, dahingehend mit der Maßgabe zu teilen und damit durch normale Türöffnungen eintransportieren zu können, daß dabei der die Heizgaszüge enthaltende Gehäuseteil von der Teilung des Kessels unberührt bleibt, d.h., die Heizgaszüge selbst nicht geteilt werden müssen.

Diese Aufgabe ist mit einem Heizungskessel der eingangs genannten Art nach der Erfindung durch die im Kennzeichen des Hauptanspruches angeführten Merkmale gelöst. Vorteilhafte Weiterbildungen ergeben sich nach den Unteransprüchen.

Bei dieser erfindungsgemäßen Ausbildung des Heizungskessels sind also die Heizgaszüge mit ihren Einmündungen in die Brennkammer gewissermaßen im brennerfernen Teil der Brennkammer zusammengedrängt angeordnet, so daß der restliche vordere Teil der Brennkammer bzw. dieser Teil des ganzen wasserführenden Kesselgehäuses einer Trennung problemlos zugänglich wird, für den Eintransport durch eine Tür abgenommen und nach dem Eintransport wieder zusammengesetzt werden kann. Um im Anschlußbereich der beiden Teile keine aufwendig abzudichtenden Durchgänge für das im Gesamtgehäuse befindliche Wasser vorsehen zu müssen, sind zwischendem wasserführenden Innenraum des den brennerseitigen Teil der Brennkammer enthaltenden Gehäuse und dem wasserführenden Innenraum des anderen Kesselteiles äußere, im Bereich der Trennebene endende und miteinander flüssigkeitsdicht verbindbare Vor- und Rücklaufleitungen angeordnet, die in geeigneter Weise durch einfach abdichtbare Flanschanschlüsse oder sonstige geeignete Verbindungen flüssigkeitsdicht verbunden werden.

Was die Sammelkammer (Kondensat- oder Rauchgassammelkammer) betrifft, so könnte diese grundsätzlich im Querschnitt so bemessen werden, daß diese nicht wesentlich größer ist als das Brennkammerteil, an das sich die Heizgaszüge mit dem zugehörigen wasserführenden Gehäuseteil anschließen. Da der Kessel aber durch die relativ weit auskragende Brennkammer bzw. das diesen Teil der Brennkammer aufnehmende Gehäuseteil bis zu einem gewissen Grade "kopflastig" würde, werden bevorzugt auch der Kesselsockel oder die ggf. den Sockel selbst bildende Sammelkammer mit entsprechender Länge bemessen und dabei so ausgebildet, daß auch diese im gleichen Sinne geteilt werden können oder daß die Sammelkammer bzw. der Sockel, die ja nicht wasserführend sind, insgesamt trennbar mit dem darüber befindlichen Kesselteil lösbar verbunden werden. Die Maßgabe, die Sammelkammer als Kesselsockel auszubilden, ist dabei so zu verstehen, daß die eigentliche Sammelkammer, sei es nun die Sammelkammer im Sinne einer Rauchgassammelkammer, im Querschnitt nicht größer ist als das wasserführende Gehäuse, in dem sich die Heizgaszüge erstrecken und der Kesselsockel im Sinne eines Rahmengestelles ausgebildet ist, auf dem das ganze wasserführende Gehäuseteil aufgesetzt und aufmontiert werden kann. Die Kondensatsammel- bzw. Rauchgassammelkammer kann bei Anordnung eines Rahmengestelles als Sockel integrales Bauteil des wasserführenden Kesselgehäuses sein, ebenso ist es aber möglich, diese Sammelkammer lösbar unten an die Abschlußwand des wasserführenden Kesselteiles anzusetzen, an der die Heizgaszüge ausmünden.

Abgesehen davon, daß die Verbindungsleitungen zum abnehmbaren Kesselteil direkt oder im Bereich der Teilungsebene teilbar sind, die sich quer durch die Brennkammer erstreckt, sind natürlich alle anderen Leitungsstutzen bezüglich ihrer Länge und ihrer Auskragung so bemessen, daß auch in dieser Hinsicht ein problemloser Eintransport in normale Türöffnungen ermöglicht ist.

Wenn es sich beim Ganzen um einen Kondensatkessel handelt, bei dem also gezielt eine Abkühlung der Heizgase bis zum Kondensatanfall angestrebt wird, sind natürlich die gasführenden Trennwände aus kondensatfestem Blech, nämlich Edelstahlblech gebildet, während für Kessel dieser Art, die nicht als Kondensatkessel betrieben werden, normales Kesselbaustahlblech benutzt werden kann.

Der erfindungsgemäße Heizungskessel wird nachfolgend anhand der zeichnerischen Darstellung von Ausführungsbeispielen näher erläutert. Es zeigt schematisch

Fig. 1, 2 den Heizungskessel als sogenannten Brennwertkessel im Quer- und Längsschnitt;

Fig. 3, 4 den Heizungskessel als Niedertemperaturkessel im Quer- und Längsschnitt;

Fig. 5 in Draufsicht eine bauliche Einzelheit;

Fig. 6 eine Draufsicht auf den Kessel gemäß Fig. 3, 4 und

Fig. 7 eine besondere Ausführungsform des Heizungskessels.

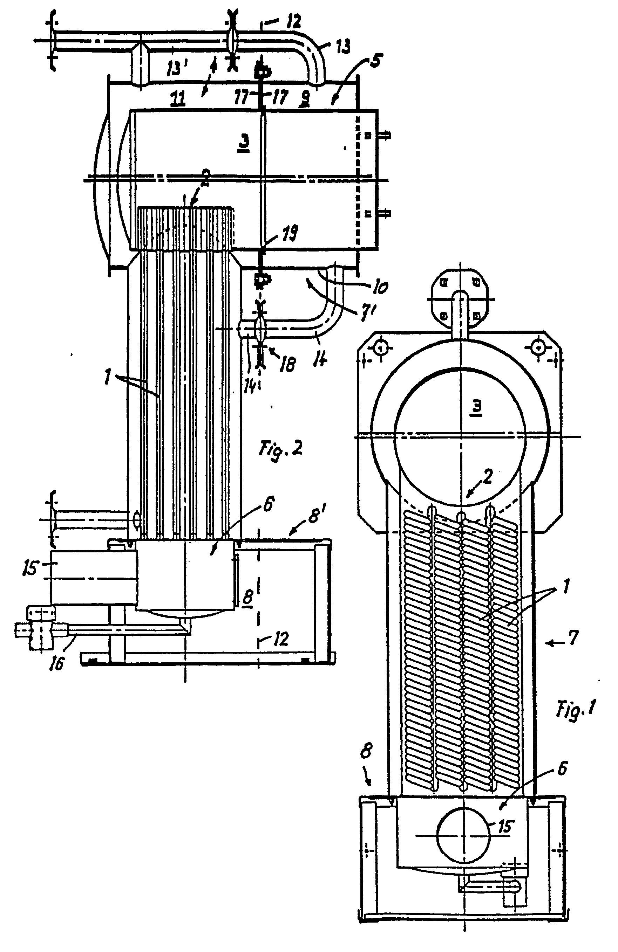

Wie aus den Fig. 1 bis 4 erkennbar, bestehen diese Kessel aus einem wasserführenden Gehäuse mit im Oberteil angeordneter, im wesentlichen horizontal orientierter Brennkammer 3, von der aus die Heizgaszüge 1 zu einer unten am Gehäuse angeordneten Sammelkammer 6 mit Gasabzug 15 geführt sind.

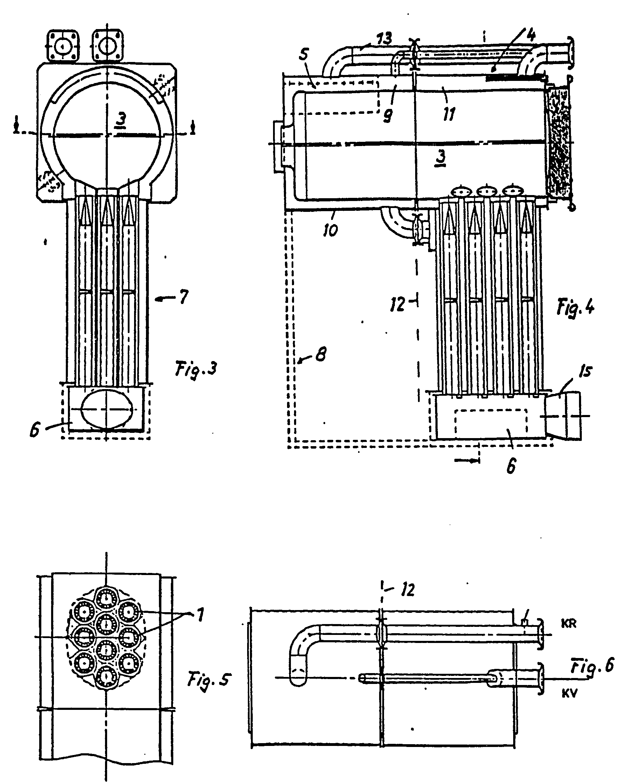

Beim Kessel nach den Fig. 1, 2 handelt es sich um einen Kondensatkessel und beim Kessel nach den Fig. 4 bis 6 um einen sogenannten Niedertemperaturkessel für Öl-/Gasbetrieb. Wie ersichtlich, ist der prinzipielle Aufbau beider Kessel gleich. Wesentliche Abweichungen bestehen lediglich in der konstruktiven Ausbildung der Heizgaszüge und in der Auswahl der Art der verwendeten Stahlbleche, d.h. beim Heizungskessel nach den Fig. 1, 2 sind die Heizgaszüge 1 in Form von geprägten Taschen ausgebildet, während die Heizgaszüge 1 beim Kessel nach den Fig. 3, 4 aus Rohren gebildet sind, die, wie aus Fig. 5 ersichtlich, innen mit Rippen besetzt sind, die Teile einer Rohrrinnenschale bilden. Ferner ist beim Kessel nach den Fig. 1, 2 die Sammelkammer 6 mit einem Kondensatabfluß 16 versehen.

Beiden Kesseln ist gemeinsam, daß die Heizgaszüge 1 und deren Einmündungen 2 in die Brennkammer 3 im brennerfernen Bereich 4 der Brennkammer 3 angeordnet sind, wobei der vordere, heizgaszugfreie Teil 5 der Brennkammer 3 als separates Kesselteil an den den anderen Teil der Brennkammer 3, die Heizgaszüge 1 und die Sammelkammer 6 enthaltenen Kesselteile 7 wasserführend angeschlossen ist. Wie erwähnt, könnte der abtrennbare Kesselteil im Bereich der Trennebene 12 durch entsprechende Öffnungen in den Anschlußwänden 17 unmittelbar mit Durchströmöffnungen versehen sein, da dies aber mit einem beträchtlichen Abdichtungsaufwand versehen wäre, wird der Heizkessel vorteilhaft derart ausgebildet, daß zwischen dem wasserführenden Innenraum 9 des den brennerseitigen Teil 5 der Brennkammer 3 enthaltenden Gehäuse 10 und dem wasserführenden Innenraum 11 des anderen Kesselteiles äußere, im Bereich der Trennebene 12 endende und miteinander flüssigkeitsdicht verbindbare Vor- und Rücklaufleitungen 13, 14 angeordnet sind, die, im dargestellten Ausführungsbeispiel entsprechende Flanschanschlüsse 18 aufweisen. Die gasdichte Abdichtung der beiden Kesselteile ist dabei nicht so problematisch, so daß im Bereich der Trennebene 12 die Anordnung eines Dichtungsringes 19 genügt.

Wie aus den Fig. 2 und 4 erkennbar, handelt es sich bei dem abtrennbaren Teil um ein konstruktiv und fertigungsmäßig einfaches Teil, während alle anderen und aufwendiger miteinander zu verbindenden Kesselelemente im anderen Kesselteil zusammengefaßt sind. Bezüglich der Sammelkammer 6 bzw. des Kesselsokkels 8 sind die Heizkessel derart ausgebildet, daß die als Kesselsockel 8 ausgebildete Sammelkammer in bezug auf das in die Heizgaszüge 1 enthaltende Kesselteil 7 diesem in gleicher Weise wie das gesamte Brennkammerkesselteil 7' zugeordnet und das seitlich überragende Teil 8' des Sockels 8 als separates Teil anschließbar ausgebildet oder der ganze Keaselsockel 8 als separates Teil an das die Heizgaszüge 1 enthaltende Kesselteil 7 anschließbar ausgebildet ist. Die eigentliche Sammelkammer 6 ist dabei so bemessen, daß diese unterhalb des Kesselteiles 7 die Ausmündungen der Heizgaszüge 1 erfaßt und die Sammelkammer im als Rahmengestell ausgebildeten Sockel 8 untergebracht ist, der den ganzen Kessel trägt. Wie in Fig. 2 angedeutet, kann dabei das nach rechts auskragende Teil 8' des Sockels ebenfalls abtrennbar ausgebildet sein, bevorzugt wird aber eine lösbare Verbindung des Sockels 8 mit dem Kesselteil 7, so daß der Sokkel für den Transport durch eine Türöffnung abgeschraubt und danach am Installationsort problemlos wieder zusammengefügt werden kann.

Die Ausführungsform nach den Fig. 4 bis 6 stellt, wie erwähnt, einen Niedertemperaturkessel dar, wobei die Sammelkammer 6 die Rauchgaskammer mit dem Rauchgasabzug 15 bildet. Wie in Fig. 4 gestrichelt angedeutet, weicht der Sockel 8 etwas von dem gemäß Fig. 1, 2 insofern ab, als hierbei das Rahmengestell das separat ansetzbare Brennkammerteil 5 unmittelbar mitträgt. Der Freiraum unter dem Gehäuse 10 kann bspw. zur Unterbringung eines separaten Brauchwasserbereiters ausgenutzt werden.

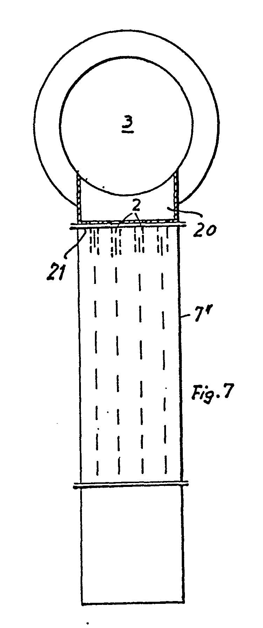

Bei der Ausführungsform nach Fig. 7, die in Seitenansicht etwa der gemäß Fig. 2 oder 4 entspricht, münden die Heizgaszüge nicht direkt in die Brennkammer 3 ein, sondern diese ist mit einem kastenartigen Anschlußstück 20 versehen, an das das Gehäuseteil 7'' angeflanscht ist, d.h., die Heizgaszüge münden hierbei an der Anschlußwand 21 des Gehäuseteiles 7'' aus. Der Brennkammerkesselteil 7' muß hierbei also nicht mehr, wie vorbeschrieben, teilbarsein, da dieser Teil 7' insgesamt vom Kesselteil 7'' gelöst und insoweit beide Teile problemlos eintransportiert werden können.

**Patentansprüche**

1. Heizungskessel, bestehend aus einem wasserführenden Gehäuse, in dessen einem Teil die im wesentlichen horizontal orientierte Brennkammer (3) angeordnet ist, von der aus im anderen Teil des Gehäuses Heizgaszüge (1) im wesentlichen vertikal orientiert, zu einer Sammelkammer (6) mit Gasabzug (15) geführt sind, dadurch gekennzeichnet, daß die Heizgaszüge (1) und deren Brennkammereinmündungen (2) im brennerfernen Bereich (4) der Brennkammer (3) angeordnet sind, wobei der vordere, heizgaszugfreie Teil (5) der Brennkammer (3) als separates Kesselteil an den den anderen Teil der Brennkammer (3), die Heizgaszüge (1) und die Sammelkammer (6) enthaltenden Kesselteil (7) wasserführend angeschlossen ist und/oder die Heizgaszüge (1) mit ihrem wasserführenden Gehäuseteil (7'') lösbar an einem kastenförmigen Anschlußstück (20) der Brennkammer (3) des die Brennkammer (3) enthaltenden Kesselteiles (7') angeschlossen sind.

2. Heizungskessel nach Anspruch 1, dadurch gekennzeichnet, daß ein die Sammelkammer (6) enthaltende oder die Sammelkammer bildende Kesselsockel (8) in bezug auf das die Heizgaszüge (1) enthaltende Kesselteil (7) diesem in gleicher Weise wie das gesamte Brennkammerkesselteil (7') zugeordnet und ein seitlich überragendes Teil (8') des Sockels (8) als separates Teil anschließbar ausgebildet oder der ganze Kesselsockel (8) als separates Teil an das die Heizgaszüge (1) enthaltende, separate Teil des Kesselteiles (7) anschließbar ausgebildet ist.

3. Heizungskessel nach Anspruch 1 oder 2, dadurch gekennzeichnet, daß zwischen dem wasserführenden Innenraum (9) des den brennerseitigen Teil der Brennkammer (3) enthaltenden Gehäuses (10) und dem wasserführenden Innenraum (11) des anderen Kesselteiles äußere, im Bereich der Trennebene (12) endende und miteinander flüssigkeitsdicht verbindbare Vor- und Rücklaufleitungen (13, 14) angeordnet sind.

4. Heizungskessel nach einem der Ansprüche 1 bis 3, dadurch gekennzeichnet, daß ein Kesselsockel (8) in Form eines Rahmengestelles ausgebildet und dieses lösbar mit dem Kesselteil (7) verbunden und innerhalb des Rahmengestelles die Sammelkammer (6) angeordnet ist.

**Revendications**

1. Chaudière, composée d'un carter de circulation de l'eau dans l'une des parties duquel est agencée la chambre de combustion (3), orientée sensiblement en direction horizontale et à partir de laquelle s'étendent, dans l'autre partie du carter, des carneaux de gaz chauds (1) orientés sensiblement en direction verticale et conduisant jusqu'à une chambre de collecte (6) avec un évent de gaz (15), caractérisée en ce que les carneaux de gaz chauds (1) et leurs entrées (2) dans la chambre de combustion (3) sont agencés dans la zone (4) de la chambre de combustion (3), éloignée du brûleur, la partie avant (5) de la chambre de combustion (3), libre de carneaux de gaz chauds, constituant une partie de chaudière séparée, raccordée, en assurant la continuité de la circulation d'eau, à la partie de chaudière (7) renfermant l'autre partie de la chambre de combustion (3), les carneaux de gaz chauds (1) et la chambre de collecte (6), et/ou les carneaux de gaz chauds (1) avec leur partie (7'') de carter de circulation d'eau, étant reliés de manière démontable à une pièce de raccordement en forme de caisson (20) de la chambre de combustion (3) de la partie de chaudière (7') renfermant la chambre de combustion (3).

2. Chaudière selon la revendication 1, caractérisée en ce qu'un socle de chaudière (8) renfermant la chambre de collecte (6) ou constituant cette chambre de collecte, est associé à la partie de chaudière (7) renfermant les carneaux de gaz chauds (1), et par rapport à celle-ci, de la même manière que l'ensemble de la partie de chaudière (7') avec la chambre de combustion, et en ce qu'une partie (8') du socle (8), en saillie latérale, est réalisée sous la forme d'une partie séparée pouvant être rapportée, ou bien l'ensemble du socle de chaudière (8) est réalisé sous la forme d'une partie individuelle séparée pouvant être raccordée à la partie séparée de chaudière (7) renfermant les carneaux de gaz chauds.

3. Chaudière selon la revendication 1 ou 2, caractérisée en ce que des conduites extérieures de circulation aller et retour (13, 14) se terminant dans la zone du plan de joint (12) et pouvant être reliées de manière étanche aux liquides, sont agencées entre l'espace intérieur de circulation d'eau (9) du carter (10) renfermant la partie côté brûleur de la chambre de combustion (3), et l'espace intérieur de circulation d'eau (11) de l'autre partie de chaudière.

4. Chaudière selon l'une des revendications 1 à 3, caractérisée en ce qu'un socle de chaudière (8) est réalisé sous la forme d'une structure de châssis et est relié de manière démontable à la partie de chaudière (7), la chambre de collecte (6) étant agencée à l'intérieur de la structure de châssis.

**Claims**

1. A boiler comprising a water-carrying housing in the one part of which is disposed the combustion chamber (3) oriented in the substantially horizontal direction, from which combustion chamber (3), in the other part of the housing, are guided heating gas flues (1) oriented in the substantially vertical direction, to a collecting chamber (6) exhibiting a gas exhaust vent (15), characterized in that the heating gas flues (1) and their combustion chamber terminations (2) are located in the area (4) of the combustion chamber (3), remote from the burner, wherein the frontsided part (5) of the combustion chamber (3) being free from any heating gas flues is connected, in water-carrying manner, as a separate boiler part, to the boiler part (7) containing the other part of the combustion chamber (3), the heating gas flues (1) and the collecting chamber (6), and/or that the heating gas flues (1) with the water-carrying housing part (7'') are detachably connected to a box-type connecting piece (20) of the combustion chamber (3) of the boiler part (7') containing the combustion chamber (3).

2. A boiler according to claim 1, characterized in that a boiler base (8) containing the collecting chamber (6) or forming the collecting chamber, relative to the boiler part (7) containing the heating gas flues (1) is associated to the said boiler part (7) in the same manner as the entire boiler part (7') of the combustion chamber, and that a laterally protruding part (8') of the base (8) is formed as a connectible separate part or the entire boiler base (8) is formed as a separate part capable of being connected to the separate part of the boiler part (7) containing the heating gas flues (1).

3. A boiler according to claims 1 or 2, characterized in that disposed between the water-carrying inner chamber (9) of the housing (10) containing the burner-sided part of the combustion chamber (3) and the water-carrying interior chamber (11) of the other boiler part are outer forward- and return-flow conduits (13, 14) terminating in the area of the separating plane (12) and being interconnectible in fluid-tight manner.

4. A boiler according to any one of claims 1 to 3, characterized in that a boiler base (8) is in the form of a frame-type mount detachably connected to the boiler part (7) and that the collecting chamber (6) is disposed within the said frame-type mount.

EP  0 250 874  B1

Fig. 2

Fig. 1

1

Fig.3

7

6

3

Fig.4

13

5

9

11

3

10

12

8

15

6

4

Fig.5

1

Fig.6

12

KR

KV

*3*

2

20

21

7'

*Fig.7*